# EUROPÄISCHE PATENTSCHRIFT

(11) **EP 3 272 200 B1**
(45) Veröffentlichungstag und Bekanntmachung des Hinweises auf die Patenterteilung: **22.05.2019**
(21) Anmeldenummer: 17186255.0
(22) Anmeldetag: 16.02.2012
(51) Int. Cl.: A01G 18/00, A01G 18/70

(54) **SYSTEM UND VERFAHREN ZUR KULTIVIERUNG UND ERNTE VON PILZEN**
SYSTEM AND METHOD FOR CULTIVATING AND HARVESTING MUSHROOMS
SYSTÈME ET PROCÉDÉ DE CULTURE ET DE RÉCOLTE DE CHAMPIGNONS

(30) Priorität: 16.02.2011 DE 102011011411
(43) Veröffentlichungstag der Anmeldung: 24.01.2018
(62) Teilanmeldung aus: 12710023.8
(73) Patentinhaber: Pilzkulturen Wesjohann GbR, 49429 Visbek (DE)
(72) Erfinder: Cornelissen, Frank, 5962 NW Melderslo (NL); Vogt, Christian, 49393 Lohne (DE); Derkx, Matt, 5961 PX Horst (NL); Kruse, Torben, 49685 Emstek (DE)
(74) Vertreter: Isfort, Olaf

(56) Entgegenhaltungen:
- EP-A2- 1 064 836
- WO-A1-98/52403
- GB-A- 1 229 351
- NL-A- 9 001 797
- NL-A- 9 301 347
- US-A1- 2009 188 771

## Beschreibung

Die Erfindung betrifft ein System zur Kultivierung und Ernte von Pilzen, mit mehreren Pflückgestellen, die sich in einer Pflückzone befinden, wobei die auf einem Substrat wachsenden Pilze auf den Pflückgestellen in einer Ebene angeordnet sind, mit wenigstens einer Stellage, in der die auf dem Substrat wachsenden Pilze in mehreren Ebenen übereinander angeordnet sind, wobei sich die Stellage in einer von der Pflückzone separaten Anwachszone befindet, wobei das System eine Überführungsvorrichtung umfasst, die das Substrat mit den Pilzen aus der Stellage auf die Pflückgestelle überführt. Außerdem betrifft die Erfindung ein Verfahren zur Kultivierung und Ernte von Pilzen.

Beim Anbau von Speisepilzen wird allgemein zwischen Licht- und Dunkelkultur unterschieden. Asiatische Pilze werden bei mehr oder weniger starkem Licht kultiviert, während weiße oder braune Champignons in Dunkelheit kultiviert werden. Die Pilze wachsen auf einem Substrat einer auf die jeweilige Pilzart abgestimmten Zusammensetzung. Grundbestandteile sind beispielsweise Stroh, Sägespäne, Holzschnitzel oder andere organische Bestandteile. Das Substrat durchläuft zunächst einen Zersetzungsprozess und wird anschließend durch Pasteurisierung desinfiziert. Das so vorbehandelte Substrat wird unter sterilen Bedingungen mit dem Pilzmyzel beimpft. Bei Champignons wird das Myzel auf Weizenkörnern kultiviert. Diese werden dem Substrat als sog. Champignonbrut hinzugesetzt. Je nach Pilzart dauert das Durchwachsen des Substrates und die anschließende Fruchtifizierungsphase unterschiedlich lange. Das Champignonmyzel durchwächst in ca. 15 Tagen das Substrat. Nach ca. 3 Wochen können die ersten Pilze geerntet werden.

Ein bekanntes System beschreibt die EP 1 064 836 A2. Mit dem bekannten System werden Champignons in klimatisierten und abgedunkelten Räumen gezüchtet. Die auf dem Substrat wachsenden Pilze sind dabei in mehreren Ebenen übereinander auf Stellagen in Pilzbeeten angeordnet. Die Pilze werden in regelmäßigen Abständen, nachdem sie eine bestimmte Größe erreicht haben, manuell abgeerntet. Das Ernten erfolgt mittels einer an der Stellage beweglich angeordneten Gondel. Mit Hilfe der Gondel wird jeder einzelne Pilz in dem klimatisierten Raum von einer auf der Gondel stehenden Pflückerin manuell gepflückt. Die Gondel ist beispielsweise an einer Seite der Stellage in eine Schiene eingehängt und mit Hilfe von Laufrollen entlang der Stellage horizontal verfahrbar.

Ein Nachteil des vorbekannten Systems ist, dass sich damit nur eine relativ geringe Pflückleistung erzielen lässt. Unter Pflückleistung versteht man die Menge von Pilzen, die pro Zeiteinheit geerntet werden. Im Pilzanbau machen die Pflückkosten 50-60% der gesamten Produktionskosten aus. Daran erkennt man, dass ein Bedarf an Systemen und Verfahren für den Pilzanbau besteht, die eine Maximierung der Pflückleistung und damit eine Reduzierung der Pflückkosten ermöglichen.

Aufgabe der Erfindung ist es somit, ein System zur Kultivierung und Ernte von Pilzen und ein entsprechendes Verfahren bereitzustellen, mit denen die Pflückkosten reduziert werden können.

Diese Aufgabe löst die Erfindung ausgehend von einem System der eingangs angegebenen Art dadurch, dass das in den verschiedenen Ebenen der Stellage befindliche Substrat jeweils auf einem in Längsrichtung der Stellage verschieblichen Bandabschnitt eines Substratbandes angeordnet ist, wobei die Bandabschnitte mittels endseitig an den Bandabschnitten angeordneter Kopplungselemente aneinander koppelbar sind. Das Aufbringen des Substrats auf ein dieses tragendes Substratband ist an sich üblich. Dies wird auch bei herkömmlichen reinen Stellagesystemen praktiziert. Auf dem Substratband wird das frische Substrat von der Stirnseite der Stellage her in die entsprechende Ebene eingebracht. Nach dem Abernten wird das Substrat auf dem Substratband aus der Stellage herausgezogen. Gemäß der Erfindung sind die Bandabschnitte des Substratbandes, die sich in der Stellage in den verschiedenen Ebenen befinden, zum Zwecke der Überführung auf das Pflückgestell aneinander koppelbar. Beim Überführen auf das Pflückgestell werden die einzelnen Bandabschnitte aneinander gekoppelt, so dass diese auf dem Pflückgestell hintereinander angeordnet sind. Die aneinander gekoppelten Bandabschnitte können somit insgesamt als eine Einheit auf das Pflückgestell überführt werden.

Zum Zwecke der Optimierung der Pflückleistung ist in der Pflückzone des Systems kann zusätzlich wenigstens ein Querförderer vorgesehen, bei dem es sich um einen mehrere nebeneinander angeordnete Pflückgestelle überspannenden Bandförderer mit Förderrichtung quer zur Längserstreckung der Pflückgestelle handelt. Die Pflückerinnen pflücken die Pilze von dem auf den Pflückgestellen befindlichen Substrat ab und legen diese sodann auf den Querförderer, der die Pilze direkt zur weiteren Verarbeitung (z.B. Wiegen, Verpacken usw.) transportiert. Zweckmäßig ist der Querförderer quer zu seiner Förderrichtung mit variabler Geschwindigkeit motorisch beweglich. Das bedeutet, dass sich der Querförderer in Richtung der Längserstreckung der Pflückgestelle kontinuierlich bewegt, während die Pflückerinnen das Substrat abernten. Die Pflückerinnen bewegen sich mit dem Querförderer mit, so dass sukzessive das gesamte auf dem jeweiligen Pflückgestell befindliche Substrat abgeerntet wird. Dabei können die abgeernteten Pilze unmittelbar auf den Querförderer abgelegt werden, der sich im Zugriffsbereich der Pflückerinnen befindet. Die Bewegungsgeschwindigkeit des Querförderers sollte variabel sein, um eine Anpassung an die Pflückgeschwindigkeit der Pflückerinnen zu ermöglichen. Das Substrat wird langsamer abgeerntet, wenn sich noch viele Pilze auf dem Substrat befinden, während die Bewegung entlang der Pflückgestelle schneller erfolgen kann, wenn das Substrat bereits teilweise abgeerntet ist.

Eine vorteilhafte Ausführungsform der Erfindung sieht vor, dass der Querförderer quer zu seiner Förderrichtung mit variabler Geschwindigkeit motorisch beweglich ist.

Außerdem kann bei dem erfindungsgemäßen System ein Längsförderer vorgesehen sein, bei dem es sich um einen Bandförderer mit Förderrichtung parallel zur Längserstreckung der Pflückgestelle handelt. Die Querförderer transportieren die darauf abgelegten Pilze auf den Längsförderer. Der Längsförderer transportiert die Pilze dann weiter, um sie weiteren Bearbeitungsschritten zuzuführen.

Vorzugsweise sind an dem Querförderer Pflückstationen für die Pilze aberntenden Personen, d.h. die Pflückerinnen, vorgesehen, wobei jede Pflückstation eine Waage zum Auswiegen der Pilze und/oder eine fixierte Klinge zum Abtrennen der Stengelenden der Pilze aufweist. Die Pflückstationen ermöglichen es, die von jeder Pflückerin abgeernteten Pilze individuell auszuwiegen. Typischerweise werden die Pilze direkt in Behälter gepflückt, in denen die Pilze später auch in den Handel gelangen. Die Pflückerinnen müssen dafür Sorge tragen, dass jeder Behälter das korrekte Füllgewicht erhält. Mittels der Waage kann außerdem die individuelle Pflückleistung der einzelnen Pflückerin festgestellt werden. Die im Bereich der Pflückstation fixierte Klinge dient zum Abtrennen der Stengelenden der Pilze. Das Abtrennen der Stengelenden gehört zum Erntevorgang und ist für die Qualität des Endproduktes unerlässlich. Die fixierte Klinge ermöglicht es der Pflückerin, mit beiden Händen zu pflücken. Sie führt die Stengelenden der abgeernteten Pilze über die Klinge, so dass diese sauber abgetrennt werden. Hierdurch wird die Pflückleistung weiter erhöht.

Weiterhin kann bei dem erfindungsgemäßen System eine Wiegestation vorgesehen sein, welcher die in Behältern befindlichen Pilze mittels der Quer- und/oder Längsförderer zugeführt werden. Eine Ausführungsform der Erfindung sieht also vor, dass die Förderer die abgeernteten Pilze einer Wiegestation zuführen, welche die in Behältern befindlichen Pilze auswiegt. Die Wiegestation wiegt die in den Behältern befindlichen Pilze also automatisch aus und stellt Über- oder Untergewicht fest. Behälter mit zu wenig Inhalt können ausgeschleust werden. Behältern mit zu viel Inhalt können einzelne Pilze entnommen werden, um das gewünschte Gewicht einzustellen.

Außerdem kann eine Scanstation vorgesehen sein, welche einen auf den Pilzen oder auf Behältern, in denen sich die Pilze befinden, angebrachten maschinenlesbaren Code ausliest. Eine Ausführungsform der Erfindung sieht also vor, dass die Förderer die abgeernteten Pilze einer Scanstation zuführen, welche einen auf den Pilzen oder auf Behältern, in denen sich die Pilze befinden, angebrachten maschinenlesbaren Code ausliest. Beispielsweise bringen die Pflückerinnen auf den Behältern oder auf den Pilzen jeweils einen Barcode an, der angibt, welche Pflückerin die in dem Behälter befindlichen Pilze gepflückt hat. Die Scanstation liest diesen Barcode aus und kann somit den Behälter der Pflückerin zuordnen. Gleichzeitig wird mittels der Wiegestation das Gewicht des Behälters festgestellt. Somit kann automatisch die Pflückleistung der einzelnen Pflückerin ermittelt werden. Dies ermöglicht eine automatisierte Ermittlung des Pflücklohns.

Nach einer weiterhin bevorzugten Ausgestaltung des erfindungsgemäßen Systems ist in den Querförderer ein Bewässerungssystem integriert, das zur Bewässerung des auf dem Pflückgestell befindlichen Substrates und der darauf wachsenden Pilze dient. Die Pilze setzen ihr Wachstum in der Pflückzone fort. Auch in der Pflückzone muss somit für eine kontinuierliche Bewässerung des Substrates und der Pilze gesorgt werden. Das Bewässerungssystem kann vorteilhaft in den Querförderer integriert sein, der quer zu seiner Förderrichtung, d.h. in Richtung der Längserstreckung des Pflückgestells, motorisch oberhalb der Pilze beweglich ist. Zur Bewässerung wird der Querförderer entlang der Pflückgestelle bewegt, während gleichzeitig das Bewässerungssystem das Substrat bewässert. Die Wassermenge pro Substratfläche kann reguliert werden, indem die Bewegungsgeschwindigkeit des Querförderers variiert wird.

Schließlich kann das erfindungsgemäße System wenigstens einen Pflückautomaten umfassen, der die auf dem Substrat wachsenden Pilze pflückt und auf den Querförderer übergibt.

Eine Ausführungsform der Erfindung sieht vor, dass der Pflückautomat an dem Querförderer angeordnet ist. Dabei kann der Pflückautomat direkt an dem Querförderer angeordnet sein, so dass sich der Pflückautomat zusammen mit dem Querförderer entlang der Pflückgestelle beim Ernten der Pilze bewegt.

Pflückautomaten, mit denen Pilze automatisch selektiv geerntet werden können, sind an sich aus dem Stand der Technik bekannt (vgl. EP 0 593 680 B1).

Bei einer erfindungsgemäßen Ausgestaltung der Erfindung ist eine Stellage vorgesehen, in der die auf dem Substrat wachsenden Pilze in mehreren Ebenen übereinander angeordnet sind, wobei sich die Stellage in einer von der Pflückzone separaten Anwachszone befindet, wobei das System eine Überführungsvorrichtung umfasst, die das Substrat mit den Pilzen aus der Stellage auf die Pflückgestelle überführt. Bei dieser Ausgestaltung der Erfindung erfolgt das Anwachsen der Pilze in der Anwachszone, die von der Pflückzone, wo das Ernten der Pilze erfolgt, räumlich getrennt ist. Die in der Anwachszone befindliche Stellage kann durchgängig für das Anwachsen der Pilze genutzt werden. Dabei erfolgt in der Anwachszone eine Klimatisierung entsprechend den Anforderungen der jeweiligen Pilzkultur, so dass für das Anwachsen ideale Umgebungsbedingungen herrschen. Nach der Anwachsphase werden die Pilze mittels der Überführungsvorrichtung in die Pflückzone überführt. Dort befinden sich die auf dem Substrat wachsenden Pilze auf dem Pflückgestell. Auf dem Pflückgestell befinden sich die Pilze in einer Ebene, und zwar in einer geeigneten Arbeitshöhe, so dass die Pilze von neben dem Pflückgestell stehenden Pflückerinnen effektiv gepflückt werden können. Auf die bei herkömmlichen Systemen am Gestell der Stellage geführten, umständlich handhabbaren Gondeln kann zum Ernten bei dem erfindungsgemäßen System ganz verzichtet werden. In der Pflückzone erfolgt die Ernte der Pilze während einer Pflückphase, während der die Pilze auch weiter nachwachsen. Somit erfolgt das Wachstum der Pilze in der Pflückzone parallel zum Anwachsen der Pilze in der Anwachszone. Nach der Überführung der auf dem Substrat wachsenden Pilze auf das Pflückgestell können die Stellagen in der Anwachszone sofort mit neuem Substrat und darauf wachsenden Pilzen bestückt werden.

Es zeigt sich, dass mit dem erfindungsgemäßen System die Effektivität erheblich gesteigert werden kann. Die Pflückleistung ist deutlich höher als bei herkömmlichen reinen Stellagesystemen. Der höhere Flächenbedarf des erfindungsgemäßen Systems, der daraus resultiert, dass die auf dem Substrat wachsenden Pilze auf dem Pflückgestell in einer Ebene angeordnet sind, wird durch die erheblich höhere Pflückleistung überkompensiert. Das hängt damit zusammen, dass in der viel Fläche benötigenden Pflückzone jedenfalls ständig geerntet werden kann. Dort braucht das Anwachsen der Pilze bis zur ersten Erntereife nicht abgewartet zu werden. Das Anwachsen erfolgt nämlich in der separaten Anwachszone.

Zweckmäßigerweise sind die Stellage und das Pflückgestell in Längsrichtung hintereinander in einer Flucht ausgerichtet, wobei eine Zugvorrichtung vorgesehen ist, welche die aneinander gekoppelten Bandabschnitte des Substratbandes bei der Überführung aus der Stellage heraus auf das Pflückgestell zieht. Die Zugvorrichtung kann dabei z.B. eine Seilwinde sein, die bei der Überführung der auf dem Substrat wachsenden Pilze auf das Pflückgestell auf der von der Stellage abgewandten Stirnseite des Pflückgestells angeordnet ist, wobei das Seil der Seilwinde an ein Ende eines der Bandabschnitte lösbar ankoppelbar ist. Nach Beendigung der Anwachsphase wird das Seil der Seilwinde z.B. an das Ende des Bandabschnitts des Substratbandes angekoppelt, der sich zuoberst in der Stellage befindet. Mittels der Seilwinde wird dieser Bandabschnitt über die Überführungsvorrichtung aus der Stellage herausgezogen. Ist der Bandabschnitt ganz aus der Stellage herausgezogen wird der z.B. in der darunter liegenden Ebene befindliche Bandabschnitt an den bereits aus der darüber liegenden Ebene herausgezogenen Bandabschnitt angekoppelt. Sodann werden die beiden aneinander gekoppelten Bandabschnitte von der Seilwinde weitergezogen. So wird weiter vorgegangen. Es werden die weiteren Bandabschnitte sukzessive an die bereits aus der Stellage herausgezogenen Bandabschnitte angekoppelt. Schließlich werden von der Seilwinde sämtliche hintereinander angeordneten, aneinander gekoppelten Bandabschnitte mittels der Seilwinde auf das Pflückgestell gezogen.

Gemäß einer bevorzugten Ausgestaltung des erfindungsgemäßen Systems umfasst dieses eine Bandhaspel, die das Substratband zum Entleeren des Pflückgestells nach der Ernte der Pilze aufwickelt. Beim Aufwickeln des Substratbandes fällt das auf dem Substratband befindliche abgeerntete Substrat von diesem ab und kann entsorgt werden. Beispielsweise kann hierzu eine Substratgrube vorgesehen sein, die sich im Bereich einer Stirnseite des Pflückgestells befindet, wobei das Substrat beim Aufwickeln des Substratbandes in die Substratgrube gelangt. Aus der Substratgrube kann das Substrat dann weitergefördert werden, z.B. um einer weiteren Verwendung als Dünger zugeführt zu werden.

Bei einer weiterhin bevorzugten Ausgestaltung des erfindungsgemäßen Systems weist die Überführungsvorrichtung ein Führungsgestell für das Substratband auf, wobei das Führungsgestell variabel neigbar ist, um die Höhenunterschiede zwischen den Ebenen der Stellage und dem Pflückgestell auszugleichen. Die Neigung des Führungsgestells wird beim Überführen der Bandabschnitte des Substratbandes aus der Stellage auf das Pflückgestell entsprechend den Höhen der einzelnen Ebenen der Stellage sukzessive geändert.

Die der Erfindung zugrunde liegende Aufgabe wird weiterhin durch ein Verfahren zur Kultivierung und Ernte von Pilzen gelöst, wobei ein Substrat mit darauf wachsenden Pilzen in eine Stellage eingebracht wird, in der die auf dem Substrat wachsenden Pilze in mehreren Ebenen übereinander angeordnet sind, wobei sich die Stellage in einer Anwachszone befindet, wo die Pilze während einer Anwachsphase unter kontrollierten Umgebungsbedingungen wachsen, wobei nach der Anwachsphase das Substrat mit den Pilzen aus der Stellage entnommen und auf ein Pflückgestell überführt wird, das sich in einer von der Anwachszone räumlich getrennten Pflückzone befindet, wobei die auf dem Substrat wachsenden Pilze auf dem Pflückgestell in einer Ebene angeordnet sind, wobei die Pilze von dem auf dem Pflückgestell befindlichen Substrat während einer sich an die Anwachsphase anschließenden Pflückphase geerntet werden. Das Verfahren ist dadurch gekennzeichnet, dass das in den verschiedenen Ebenen der Stellage befindliche Substrat jeweils auf einem in Längsrichtung der Stellage verschieblichen Bandabschnitt eines Substratbandes angeordnet ist, wobei zur Überführung auf das Pflückgestell die Bandabschnitte an ihren Enden aneinander gekoppelt werden.

Eine weitere vorteilhafte Ausführungsform des Verfahrens sieht vor, dass der Querförderer während des Pflückens quer zu seiner Förderrichtung motorisch bewegt wird, wobei sich die Pilze aberntenden Personen in Längsrichtung der Pflückgestelle mit dem Querförderer mitbewegen.

Eine weitere vorteilhafte Ausführungsform des Verfahrens sieht einen Längsförderer vor, bei dem es sich um einen Bandförderer mit Förderrichtung parallel zur Längserstreckung der Pflückgestelle handelt.

Eine weitere vorteilhafte Ausführungsform des Verfahrens sieht vor, dass die abgeernteten Pilze mittels der Förderer einer Wiegestation zugeführt werden, welche die in den Behältern befindlichen Pilze auswiegt.

Eine weitere vorteilhafte Ausführungsform des Verfahrens sieht vor, dass die Förderer die abgeernteten Pilze einer Scanstation zuführen, welche einen auf den Pilzen oder auf den Behältern angebrachten maschinenlesbaren Code auslesen.

Eine weitere vorteilhafte Ausführungsform des Verfahrens sieht vor, dass das auf dem Pflückgestell befindliche Substrat und die darauf wachsenden Pilze mittels eines in den Querförderer integrierten Bewässerungssystems während der Pflückphase bewässert werden.

Ausführungsbeispiele der Erfindung werden im Folgenden anhand der Zeichnungen näher erläutert. Es zeigen:
- Figur 1:: schematische Seitenansicht eines erfindungsgemäßen Systems;
- Figur 2:: schematische Draufsicht der Pflückzone des erfindungsgemäßen Systems.

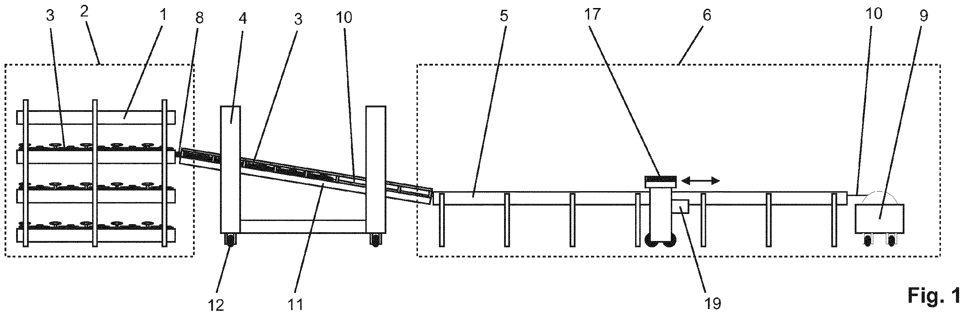

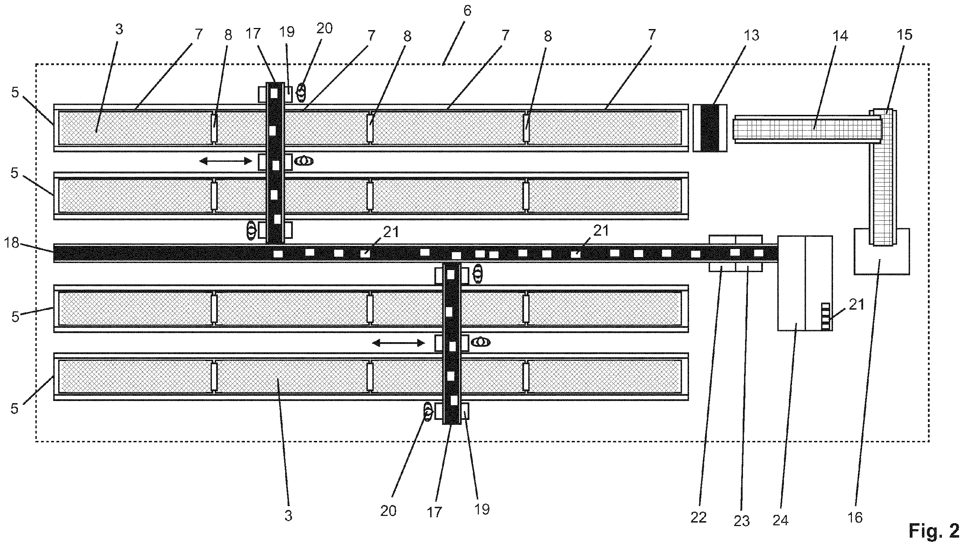

Das in den Figuren dargestellte System umfasst eine Stellage 1, die sich in einer Anwachszone 2 befindet. Die Anwachszone 2 ist ein abgeschlossener Raum, der klimatisierbar ist, um die zum Anwachsen der Pilze idealen Umgebungsbedingungen zu schaffen. In der Anwachszone 2 befinden sich mehrere Stellagen 1 nebeneinander (in Richtung senkrecht zur Darstellungsebene der Figur 1). Die Stellage 1 weist mehrere übereinander angeordnete Ebenen auf, in denen sich auf einem Substrat 3 wachsende Pilze befinden. Eine Überführungsvorrichtung 4 ist vorgesehen, die das Substrat 3 mit den Pilzen aus der Stellage 1 entnimmt und auf ein Pflückgestell 5 überführt, das sich in einer von der Anwachszone 2 räumlich getrennten Pflückzone 6 befindet. Wie in der Figur 1 zu erkennen ist, weist das Pflückgestell 5 nur eine einzige Ebene auf, auf dem sich die auf dem Substrat wachsenden Pilze nach der Überführung befinden. Die Höhe des Pflückgestells 5 entspricht der Arbeitshöhe der neben dem Pflückgestell 5 arbeitenden Pflückerinnen, die die Pilze manuell von dem auf dem Pflückgestell 5 befindlichen Substrat 3 abpflücken. Wie in Figur 2 angedeutet ist, befindet sich das Substrat 3 jeweils auf einem Bandabschnitt 7 eines Substratbandes. Das Substratband bzw. die Bandabschnitte 7 sind sowohl auf dem Pflückgestell 5 als auch in der Stellage 1 verschieblich. An ihren Endseiten weisen die Bandabschnitte 7 Kopplungselemente 8 auf, durch die die Bandabschnitte aneinander koppelbar sind. Die Figur 2 zeigt auf jedem Pflückgestell 5 vier mittels der Kopplungselemente 8 aneinander gekoppelte Bandabschnitte 7. Die Figur 1 zeigt eine an der von der Stellage 1 abgewandten Stirnseite des Pflückgestells 5 angeordnete Seilwinde 9, deren Zugseil 10 an das Ende des auf der Überführungsvorrichtung 4 befindlichen Bandabschnitts des Substratbandes angekoppelt ist. Der auf der Überführungsvorrichtung befindliche Bandabschnitt 7 ist seinerseits über das Kopplungselement 8 mit dem in der zweiten Ebene von oben der Stellage 1 befindlichen Bandabschnitt des Substratbandes gekoppelt. Somit zieht die Seilwinde die beiden aneinander gekoppelten Bandabschnitte 7 aus der Überführungsvorrichtung bzw. aus der Stellage 1 auf das Pflückgestell 5. Die Neigung eines Führungsgestells 11 der Überführungsvorrichtung 4 wird sukzessive geändert, um den jeweils nächsten Substratbandabschnitt 7 ankoppeln zu können. Auf die Weise werden sämtliche Bandabschnitte mit dem darauf befindlichen Substrat und den darauf wachsenden Pilzen nacheinander von der Stellage 1 auf das Pflückgestell 5 überführt. Die Überführungsvorrichtung 4 weist Räder 12 auf, auf denen die Überführungsvorrichtung 4 in der Richtung senkrecht zur Darstellungsebene der Figur 1 verfahren werden kann, so dass die Überführungsvorrichtung 4 für mehrere nebeneinander angeordnete Stellagen 1 zum Zwecke der Überführung auf entsprechende Pflückgestelle 5 verwendet werden kann.

Die Figur 2 zeigt eine im Endbereich eines Pflückgestells 5 angeordnete Bandhaspel 13, die das auf dem Pflückgestell 5 befindliche Substratband zum Entleeren des Pflückgestells 5 nach der Ernte der Pilze aufwickelt. Dabei löst sich das Substrat von dem Substratband und wird mittels Fördervorrichtungen 14, 15 in eine Substratgrube 16 gefördert. Von dort kann das abgeerntete Substrat einer weiteren Verwendung, z.B. als Dünger, zugeführt werden.

In der Figur 2 ist zu erkennen, dass sich in der Pflückzone 6 bei dem dargestellten Ausführungsbeispiel vier Pflückgestelle 5 nebeneinander befinden. Diese sind mit in der Figur 2 nicht dargestellten Stellagen 1 jeweils in einer Flucht ausgerichtet, um das Substrat mit den darauf wachsenden Pilzen wie oben beschrieben auf die Pflückgestelle 5 zu übernehmen. In der Pflückzone 6 sind bei dem dargestellten Ausführungsbeispiel zwei Querförderer 17 vorgesehen, bei denen es sich jeweils um zwei nebeneinander angeordnete Pflückgestelle 5 überspannende Bandförderer mit Förderrichtung quer zur Längserstreckung der Pflückgestelle 5 handelt. Die Querförderer 17 sind jeweils quer zu ihrer Förderrichtung, d.h. in Längsrichtung der Pflückgestelle 5, mit variabler Geschwindigkeit motorisch beweglich, was durch die Doppelpfeile in der Figur 2 angedeutet wird. Weiterhin weist das in der Figur 2 dargestellte System einen ortsfesten Längsförderer 18 auf, der im Zwischenraum zwischen den beiden oberen Pflückgestellen 5 und den beiden unteren Pflückgestellen 5 angeordnet ist. Die Förderrichtung des Längsförderers 18 verläuft parallel zur Längserstreckung der Pflückgestelle 5. An den Querförderern 17 sind jeweils mehrere Pflückstationen 19 für Pflückerinnen 20 angeordnet, wobei jede Pflückstation eine Waage zum Auswiegen von geernteten Pilzen und eine fixierte Klinge zum Abtrennen der Stengelenden der Pilze aufweist. Die Pflückerinnen 20 ernten beidhändig die Pilze von dem auf den Pflückgestellen 5 befindlichen Substrat ab. Die Stengelenden der Pilze trennen sie mittels der an der Pflückstation fixierten Klinge ab. Die gepflückten Pilze werden in einen Behälter gelegt, der sich auf der Waage der Pflückstation 19 befindet. Sobald der Behälter die gewünschte Pilzeinwaage enthält, wird der Behälter mit den darin befindlichen Pilzen auf den oberhalb des Substrates 3 laufenden Querförderer 17 gelegt. In der Figur 2 sind eine Vielzahl von mit Pilzen gefüllten Behältern 21 auf den Quer- und Längsförderern 17, 18 dargestellt. Die Behälter 21 werden mittels der Querförderer 17 zunächst auf den Längsförderer 18 gefördert. Der Längsförderer 18 fördert die Behälter 21 sodann zu einer Wiegestation 22 und einer Scanstation 23. Auf der Wiegestation 22 werden die einzeln Behälter 21 gewogen, um festzustellen, ob diese die korrekte Pilzeinwaage enthalten. Beim Pflücken bringen die einzelnen Pflückerinnen 20 jeweils einen Barcode auf den Behältern 21 an. Dieser wird mittels der Scanstation 23 eingelesen, um den Behälter der jeweiligen Pflückerin 20 zuzuordnen. Auf diese Weise wird die Pflückleistung jeder Pflückerin 20 automatisch ermittelt. Schließlich gelangen die Behälter 21 mit den Pilzen auf ein Zwischenlager 24, von wo sie zur weiteren Bearbeitung (z.B. Verpacken) abgeholt werden können.

Die besondere Effizienz des erfindungsgemäßen Systems resultiert zum einen aus der linearen hintereinander Anordnung von Anwachszone 2, Überführungsvorrichtung 4 und Pflückzone 6, wie in Figur 1 dargestellt. Zum anderen bewirkt die Funktionalität und Anordnung der Förderer 17 und 18 in Kombination mit den Pflückgestellen 5, auf denen die auf dem Substrat wachsenden Pilze in nur einer einzigen Ebene angeordnet sind, eine signifikante Steigerung der Pflückleistung.

In Figur 1 wird die Stellage 1, wie oben bereits erläutert, zunächst von ihrer linken Stirnseite her mit dem Substrat 3 befüllt. Sodann beginnt die Anwachsphase. Nach Abschluss der Anwachsphase werden die aneinander gekoppelten Bandabschnitte 7, auf denen sich das Substrat 3 befindet, von der Stellage 1 mittels der Überführungsvorrichtung 4 auf die Pflückgestelle 5 übernommen. In der Pflückzone 6 erfolgt ein weiteres Wachstum der Pilze, während die Pilze gleichzeitig abgeerntet werden. Nach vollständigem Abernten wird das Substratband mittels der Bandhaspel 13 nach rechts gezogen und aufgewickelt, wobei das Substrat gleichzeitig von dem Band abgelöst und entsorgt wird. Das Substrat 3 mit den darauf wachsenden Pilzen durchläuft somit die Stationen Anwachszone 2, Überführungsvorrichtung 4 und Pflückzone 6 kontinuierlich in einer Richtung (in Figur 1 von links nach rechts).

Bei der Ernte pflücken die Pflückerinnen 20 die Pilze von dem Substrat 3, während sie sich vor den jeweiligen Pflückstationen 19 mit dem entlang der Pflückgestelle 5 bewegenden Querförderer 17 mitbewegen. Dabei wird das auf dem Pflückgestell 5 befindliche Substrat 3 kontinuierlich abgeerntet. Die geernteten Pilze werden mittels der Förderer 17, 18 automatisch zur weiteren Verarbeitung gefördert. Die Pflückerinnen 20 müssen insbesondere den Pflückvorgang nicht unterbrechen, um die vollen Behälter 21 abzutransportieren. Auch die umständliche Handhabung der Gondeln, die, wie oben erläutert, bei reinen Stellagesystemen üblich sind, kann bei dem erfindungsgemäßen System entfallen. Zur Effizienzsteigerung trägt weiter bei, dass die Pflückerinnen 20 mit beiden Händen pflücken können. Zum Abtrennen der Stengelenden der Pilze werden, wie oben erläutert, an den Pflückstationen der Querförderer 17 fixierte Klingen benutzt.

Insgesamt zeigt sich, dass sich mit dem erfindungsgemäßen System die Pflückleistung nahezu verdoppeln lässt. Die höheren Kosten aufgrund des erhöhten Flächenbedarfs der erfindungsgemäßen Systems werden dadurch überkompensiert.

## Patentansprüche

1. System zur Kultivierung und Ernte von Pilzen, mit mehreren Pflückgestellen (5), die sich in einer Pflückzone (6) befinden, wobei die auf einem Substrat (3) wachsenden Pilze auf den Pflückgestellen (5) in einer Ebene angeordnet sind, mit wenigstens einer Stellage (1), in der die auf dem Substrat (3) wachsenden Pilze in mehreren Ebenen übereinander angeordnet sind, wobei sich die Stellage (1) in einer von der Pflückzone (6) separaten Anwachszone (2) befindet, wobei das System eine Überführungsvorrichtung (4) umfasst, die das Substrat (3) mit den Pilzen aus der Stellage (1) auf die Pflückgestelle (5) überführt, und wobei das in den verschiedenen Ebenen der Stellage (1) befindliche Substrat (3) jeweils auf einem in Längsrichtung der Stellage (1) verschieblichen Bandabschnitt (7) eines Substratbandes angeordnet ist, wobei die Bandabschnitte (7) mittels endseitig an den Bandabschnitten (7) angeordneter Kopplungselemente (8) aneinander koppelbar sind.

2. System nach Anspruch 1, **dadurch gekennzeichnet, dass** in der Pflückzone (6) wenigstens ein Querförderer (17) vorgesehen ist, bei dem es sich um einen mehrere nebeneinander angeordnete Pflückgestelle (5) überspannenden Bandförderer mit Förderrichtung quer zur Längserstreckung der Pflückgestelle (5) handelt.

3. System nach Anspruch 1 oder 2, **dadurch gekennzeichnet, dass** die Stellage (1) und eines der Pflückgestelle (5) in Längsrichtung hintereinander in einer Flucht ausgerichtet sind, wobei eine Zugvorrichtung (9) vorgesehen ist, welche die aneinander gekoppelten Bandabschnitte (7) bei der Überführung aus der Stellage (1) heraus auf das Pflückgestell (5) zieht.

4. System nach Anspruch 3, **dadurch gekennzeichnet, dass** die Zugvorrichtung (9) eine Seilwinde ist, die bei der Überführung auf der von der Stellage (1) abgewandten Stirnseite des Pflückgestells (5) angeordnet ist, wobei das Seil (10) der Seilwinde (9) an ein Ende eines der Bandabschnitte (7) lösbar ankoppelbar ist.

5. System nach einem der Ansprüche 1 bis 4, **dadurch gekennzeichnet, dass** sich das Substrat (3) mit den darauf wachsenden Pilzen nach der Überführung auf das Pflückgestell (5) auf den aneinander gekoppelten, hintereinander angeordneten Bandabschnitten (7) des Substratbandes befindet.

6. System nach einem der Ansprüche 1 bis 5, **gekennzeichnet durch** eine Bandhaspel (13), die das Substratband zum Entleeren des Pflückgestells (5) nach der Ernte der Pilze aufwickelt.

7. System nach Anspruch 6, **gekennzeichnet durch** eine im Bereich einer Stirnseite des Pflückgestells (5) befindliche Substratgrube (16), in die das beim Aufwickeln des Substratbandes von diesem sich ablösende Substrat (3) gefördert wird.

8. System nach einem der Ansprüche 1 bis 7, **dadurch gekennzeichnet, dass** die Überführungsvorrichtung (4) ein Führungsgestell (11) für das Substratband aufweist, wobei das Führungsgestell (11) variabel neigbar ist, um die Höhenunterschiede zwischen den Ebenen der Stellage (1) und dem Pflückgestell (5) auszugleichen.

9. Verfahren zur Kultivierung und Ernte von Pilzen, wobei ein Substrat (3) mit darauf wachsenden Pilzen in eine Stellage (1) eingebracht wird, in der die auf dem Substrat (3) wachsenden Pilze in mehreren Ebenen übereinander angeordnet sind, wobei sich die Stellage (1) in einer Anwachszone (2) befindet, wo die Pilze während einer Anwachsphase unter kontrollierten Umgebungsbedingungen wachsen, wobei nach der Anwachsphase das Substrat (3) mit den Pilzen aus der Stellage (1) entnommen und auf ein Pflückgestell (5) überführt wird, das sich in einer von der Anwachszone (2) räumlich getrennten Pflückzone (6) befindet, wobei die auf dem Substrat (3) wachsenden Pilze auf dem Pflückgestell (5) in einer Ebene angeordnet sind, wobei die Pilze von dem auf dem Pflückgestell (5) befindlichen Substrat (3) während einer sich an die Anwachsphase anschließenden Pflückphase geerntet werden,
**dadurch gekennzeichnet, dass** das in den verschiedenen Ebenen der Stellage (1) befindliche Substrat (3) jeweils auf einem in Längsrichtung der Stellage (1) verschieblichen Bandabschnitt (7) eines Substratbandes angeordnet ist, wobei zur Überführung auf das Pflückgestell (5) die Bandabschnitte (7) an ihren Enden aneinander gekoppelt werden.

10. Verfahren nach Anspruch 9, **dadurch gekennzeichnet, dass** in der Pflückzone (6) wenigstens ein Querförderer (17) vorgesehen ist, bei dem es sich um einen mehrere nebeneinander angeordnete Pflückgestelle (5) überspannenden Bandförderer mit Förderrichtung quer zur Längserstreckung der Pflückgestelle (5) handelt, wobei die Pilze von dem Substrat (3) abgepflückt, in Behälter (21) gelegt und die mit Pilzen gefüllten Behälter (21) auf dem Querförderer (17) abgelegt werden.

11. Verfahren nach Anspruch 9 oder 10, **dadurch gekennzeichnet, dass** die aneinander gekoppelten Bandabschnitte (7) bei der Überführung aus der Stellage (1) heraus und auf das Pflückgestell (5) gezogen werden.

12. Verfahren nach einem der Ansprüche 9 bis 11, **dadurch gekennzeichnet, dass** sich das Substrat (3) mit den darauf wachsenden Pilzen nach der Überführung auf das Pflückgestell (5) auf den aneinander gekoppelten, hintereinander angeordneten Bandabschnitten (7) des Substratbandes befindet.

## Claims

1. System for cultivating and harvesting mushrooms, with a plurality of picking frames (5) which are located in a picking zone (6), wherein the mushrooms growing on a substrate (3) are arranged on one level on the picking frames (5), with at least one stillage (1), in which the mushrooms growing on the substrate (3) are arranged one upon the other in several level, wherein the stillage (1) being located in a growing zone (2) separate from the picking zone (6), wherein the system contains a transfer device (4) which transfers the substrate (3) with the mushrooms from the stillage (1) to the picking racks (5),
**characterized in that** the substrate (3) located on the various level of the stillage (1) is arranged in each case on a belt section (7) of a substrate which is displaceable in the longitudinal direction of the stillage(1), wherein the belt sections (7) can be coupled to one another by means of coupling elements (8) arranged at the end on the belt sections (7).

2. System according to Claim 1, **characterized in that** at least one transverse conveyor (17) is provided in the picking zone (6), the transverse conveyor (17) being a belt conveyor which spans a plurality of picking frames (5) arranged next to one another and has a conveying direction transverse to the longitudinal extent of the picking frames (5)).

3. System according to either of Claims 1 or 2, **characterized in that** the stillage (1) and one of the picking frames (5) are aligned longitudinally one behind the other in an alignment, wherein a traction device (9) is provided, which pulls the mutually coupled belt sections (7) during the transfer out of the stillage (1) out on the picking frames (5.

4. System according to Claim 3, **characterized in that** the traction device (9) is a cable winch, which is arranged during the transfer on the end side of the picking frames (5) facing away from the stillage (1), wherein the cable (10) of the cable winch (9) is releasably coupled to an end of one of the belt sections (7).

5. System according to one of Claims 1 to 4, **characterized in that** the substrate (3) with the mushrooms growing thereon (5) is located after the transfer to the picking frame on the mutually coupled, successively arranged belt sections (7) of the substrate strip.

6. System according to one of the Claim 1 to 5, **characterized by** a band reel (13) which winds up the substrate belt for emptying the picking frame (5) after harvesting the mushrooms.

7. System according to Claim 6, **characterized by** a substrate pit (16) located in the region of an end face of the picking frame (5) into which the substrate (3) detaching from the substrate belt is conveyed when the substrate belt is being wound up.

8. System according to one of the Claim 1 to 7, **characterized in that** the transfer device (4) has a guide frame (11) for the substrate belt, wherein the guide frame (11) is variably tilted to the height differences between the levels of stillage (1) and the picking frame (5).

9. Method for cultivating and harvesting mushrooms, wherein a substrate (3) with mushrooms growing thereon is placed into a stillage (1) in which the mushrooms growing on the substrate (3) are arranged on a plurality of levels one above another, wherein the stillage (1) is located in a growing zone (2) where the mushrooms grow under controlled environmental conditions during a growing phase, wherein, after the growing phase, the substrate (3) with the mushrooms is removed from the stillage (1) and transferred to a picking frame (5) which is located in a picking zone (6), which is spatially separated from the growing zone (2), wherein the mushrooms growing on the substrate (3) are arranged on one level on the picking frame (5), wherein the mushrooms are harvested from the substrate (3) located on the picking frame (5) during a picking phase following the growing phase,
**characterized, in that** the substrate (3) located in the various levels of the stillage (1) is arranged in each case on a belt section (7) of a substrate belt which is displaceable in the longitudinal direction of the stillage (1), wherein the belt sections (7) are getting coupled to one another at the ends on the belt sections (7) .

10. Method according to Claim 9, **characterized in that** at least one transverse conveyor (17) is provided in the picking zone (6), said transverse conveyor being a belt conveyor which spans a plurality of picking frames (5) arranged next to one another and has a conveying direction transverse to the longitudinal extent of the picking frames (5), wherein the mushrooms are picked off the substrate (3), placed into containers (21) and the containers (21) filled with mushrooms are deposited on the transverse conveyor (17).

11. Method according to either of Claims 11 and 13, **characterized in that** the belt sections (7) coupled to one another are pulled out of the stillage (1) during the transfer and pulled onto the picking frame (5).

12. Method according to Claim 13, **characterized in that** the substrate (3) with the mushrooms growing thereon is located after the transfer to the picking frame (5) on the mutually coupled, successively arranged belt portions (7) of the substrate belt.

## Revendications

1. Système de culture et de récolte de champignons, avec plusieurs tables de cueillette (5), qui se trouvent dans une zone de cueillette (6), dans lequel les champignons croissant sur un substrat (3) sont disposés dans un plan, avec au moins un râtelier (1), dans lequel les champignons croissant sur le substrat (3) sont superposés dans plusieurs plans, dans lequel le râtelier (1) se trouve dans une zone de croissance (2) séparée de la zone de cueillette (6), dans lequel le système comprend un dispositif de transfert (4), qui transfère le substrat (3) avec les champignons du râtelier (1) à la table de cueillette (5), et dans lequel le substrat (3) se trouvant dans les différents plans du râtelier (1) est respectivement disposé sur une partie de bande (7) d'une bande de substrat mobile dans la direction longitudinale du râtelier (1), dans lequel les parties de bande (7) peuvent être couplées l'une à l'autre au moyen d'éléments de couplage (8) disposés aux extrémités des parties de bande (7).

2. Système selon la revendication 1, **caractérisé en ce qu'**il est prévu dans la zone de cueillette (6) au moins un convoyeur transversal (17), qui est un convoyeur à bande surplombant plusieurs tables de cueillette juxtaposées (5) avec une direction de transport transversale à l'extension longitudinale des tables de cueillette (5).

3. Système selon la revendication 1 ou 2, **caractérisé en ce que** le râtelier (1) et une des tables de cueillette (5) sont orientés en alignement l'un derrière l'autre en direction longitudinale, dans lequel il est prévu un dispositif de traction (9), qui tire les parties de bande (7) couplées l'une à l'autre lors du transfert du râtelier (1) à la table de cueillette (5).

4. Système selon la revendication 3, **caractérisé en ce que** le dispositif de traction (9) est un treuil à câble, qui est disposé lors du transfert sur le côté frontal de la table de cueillette (5) situé à l'opposé du râtelier (1), dans lequel le câble (10) du treuil à câble (9) peut être attaché de façon détachable à une extrémité d'une des parties de bande (7).

5. Système selon l'une quelconque des revendications 1 à 4, **caractérisé en ce que** le substrat (3) avec les champignons croissant sur lui, après le transfert sur la table de cueillette (5), se trouve sur les parties de bande (7) de la bande de substrat disposées l'une derrière l'autre et couplées l'une à l'autre.

6. Système selon l'une quelconque des revendications 1 à 5, **caractérisé par** une enrouleuse de bande (13), qui enroule la bande de substrat afin de vider la table de cueillette (5) après la récolte des champignons.

7. Système selon la revendication 6, **caractérisé par** une fosse à substrat (16) se trouvant dans la région d'un côté frontal de la table de cueillette (5), dans laquelle est transporté le substrat (3) se décollant de la bande de substrat lors de l'enroulement de cette dernière.

8. Système selon l'une quelconque des revendications 1 à 7, **caractérisé en ce que** le dispositif de transfert (4) présente un bâti de guidage (11) pour la bande de substrat, le bâti de guidage (11) pouvant être incliné de manière variable afin de compenser les différences de hauteur entre les plans du râtelier (1) et la table de cueillette (5).

9. Procédé de culture et de récolte de champignons, dans lequel on introduit un substrat (3) avec des champignons croissant sur lui dans un râtelier (1), dans lequel les champignons croissant sur le substrat (3) sont superposés dans plusieurs plans, dans lequel le râtelier (1) se trouve dans une zone de croissance (2), où les champignons croissent pendant une phase de croissance dans des conditions ambiantes contrôlées, dans lequel après la phase de croissance on enlève le substrat (3) avec les champignons hors du râtelier (1) et on le transfère sur une table de cueillette (5), qui se trouve dans une zone de cueillette (6) spatialement séparée de la zone de croissance (2), dans lequel les champignons croissant sur le substrat (3) sont disposés dans un plan sur la table de cueillette (5), dans lequel on récolte les champignons du substrat (3) se trouvant sur la table de cueillette (5) pendant une phase de cueillette succédant à la phase de croissance, **caractérisé en ce que** le substrat (3) se trouvant dans les différents plans du râtelier (1) est respectivement disposé sur une partie de bande (7) d'une bande de substrat mobile dans la direction longitudinale du râtelier (1), dans lequel pour le transfert à la table de cueillette (5), les parties de bande (7) sont couplées l'une à l'autre au niveau de leurs extrémités.

10. Procédé selon la revendication 9, **caractérisé en ce qu'**il est prévu dans la zone de cueillette (6) au moins un convoyeur transversal (17), qui est un convoyeur à bande surplombant plusieurs tables de cueillette juxtaposées (5) avec une direction de transport transversale à l'extension longitudinale des tables de cueillette (5), dans lequel on cueille les champignons du substrat (3), on les dépose dans un récipient (21) et on dépose les récipients (21) remplis de champignons sur le convoyeur transversal (17).

11. Procédé selon la revendication 9 ou 10, **caractérisé en ce que** l'on tire les parties de bande (7) couplées l'une à l'autre lors du transfert du râtelier (1) à la table de cueillette (5).

12. Procédé selon l'une quelconque des revendications 9 à 11, **caractérisé en ce que** le substrat (3) avec les champignons croissant sur lui se trouve après le transfert sur la table de cueillette (5) sur les parties de bande (7) de la bande de substrat disposées l'une derrière l'autre et couplées l'une à l'autre.
